(19) Europäisches Patentamt
European Patent Office
Office européen des brevets

(11) **EP 3 936 227 A1**

(12) **EUROPEAN PATENT APPLICATION**
published in accordance with Art. 153(4) EPC

(43) Date of publication:
**12.01.2022 Bulletin 2022/02**

(21) Application number: **19917900.3**

(22) Date of filing: **07.03.2019**

(51) Int Cl.:
**B01J 23/22** (2006.01)   **B01D 53/86** (2006.01)
**B01D 53/90** (2006.01)

(86) International application number:
**PCT/JP2019/009203**

(87) International publication number:
**WO 2020/179078 (10.09.2020 Gazette 2020/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **The Chugoku Electric Power Co., Inc.**
  **Hiroshima-shi, Hiroshima 730-8701 (JP)**
• **Tokyo Metropolitan Public University Corporation**
  **Shinjuku-ku**
  **Tokyo 163-0926 (JP)**

(72) Inventors:
• **KIYONAGA Eiji**
  **Hiroshima-shi, Hiroshima 730-8701 (JP)**

• **YOSHIDA Kazuhiro**
  **Hiroshima-shi, Hiroshima 730-8701 (JP)**
• **MORITA Keiichiro**
  **Hiroshima-shi, Hiroshima 730-8701 (JP)**
• **MURAYAMA Toru**
  **Hachioji-shi, Tokyo 192-0397 (JP)**
• **HARUTA Masatake**
  **Hachioji-shi, Tokyo 192-0397 (JP)**
• **HATA Shinichi**
  **Hachioji-shi, Tokyo 192-0397 (JP)**
• **INOMATA Yusuke**
  **Hachioji-shi, Tokyo 192-0397 (JP)**

(74) Representative: **HGF**
**HGF Europe LLP**
**Neumarkter Straße 18**
**81673 München (DE)**

(54) **DENITRATION CATALYST AND METHOD FOR PRODUCING SAME**

(57)    Provided is a catalyst having better denitration efficiency at low temperatures compared to the prior art, during a selective catalytic reduction reaction in which ammonia is used as a reducing agent.

This denitration catalyst contains vanadium oxide including vanadium pentoxide and has a defect site in which oxygen deficiency occurs in a crystal structure of the vanadium pentoxide.

FIG. 1A

☑100℃
▨150℃

EP 3 936 227 A1

**Description**

TECHNICAL FIELD

The present invention relates to a denitration catalyst and a production method thereof.
In more detail, the present invention relates to a denitration catalyst used upon purifying exhaust gas produced by fuel combusting, and a production method thereof.

BACKGROUND ART

As one of the pollutants emitted into air by the combustion of fuel, nitrogen oxides ($NO$, $NO_2$, $NO_3$, $N_2O$, $N_2O_3$, $N_2O_4$, $N_2O_5$) can be exemplified.
The nitrogen oxides induce acid rain, ozone layer depletion, photochemical smog, etc., and have a serious influence on the environment and human bodies; therefore, treatment thereof is an important problem.
As technology for removing the above-mentioned nitrogen oxides, the selective catalytic reduction reaction ($NH_3$-SCR) with ammonia ($NH_3$) as the reductant has been known.
As disclosed in Patent Document 1, a catalyst using titanium oxide as the carrier and supporting vanadium oxide is being widely used as the catalyst used in the selective catalytic reduction reaction.
Titanium oxide has low activity for sulfur oxides, and has high stability; therefore, it is best established as the carrier.
On the other hand, although vanadium oxide plays a main role in $NH_3$-SCR, since it oxidizes $SO_2$ to $SO_3$, it has not been able to support on the order of 1 wt% or more of vanadium oxide.
In addition, with conventional $NH_3$-SCR, since the catalyst made by supporting vanadium oxide on a titanium oxide carrier almost does not react at low temperature, it must be used at high temperatures such as 350 to 400°C.
However, in order to raise the degrees of freedom of design in devices and facilities realizing $NH_3$-SCR and make more efficient, the development of a catalyst exhibiting high nitrogen oxide reduction rate activity at low temperatures has been demanded.
Subsequently, the present inventors have found a denitration catalyst in which vanadium pentoxide is present in at least 43 wt%, having a BET specific surface area of at least 30 $m^2$/g, and which can be used in denitration at 200°C or lower (Patent Document 2).

Patent Document 1: Japanese Unexamined Patent Application, Publication No. 2004-275852
Patent Document 2: Japanese Patent No. 6093101

DISCLOSURE OF THE INVENTION

Problems to be Solved by the Invention

The present inventors, as a result of thorough research trying to achieve a further improvement of the above Patent Document 2, found a denitration catalyst exhibiting a more superior reduction rate activity of nitrogen oxides.
The present invention has an object of providing a catalyst having better denitration efficiency at low temperature compared to the conventional technology, upon the selective catalytic reduction reaction with ammonia as the reductant.

Means for Solving the Problems

The present invention relates to a denitration catalyst containing vanadium oxide, in which the vanadium oxide includes vanadium pentoxide, and has a defect site at which oxygen is deficient in the crystal structure of the vanadium pentoxide.
In addition, in the denitration catalyst, it is preferable for an intensity ratio ($P_{V2O5}/P_{v6O13}$) of peak intensity ($P_{v6O13}$) of a (110) plane of $V_6O_{13}$ (JCPDS01-071-2235) relative to peak intensity ($P_{V2O5}$) of a (001) plane of $V_2O_5$ (JCPDS00-009-0387) detected by powder X-ray diffraction to be at least 0.08 and no more than 2.05.
In addition, in the denitration catalyst, it is preferable for reflectance at wavelength 1200 nm normalized with reflectance at wavelength 600 nm as 1 in the ultraviolet-visible near-infrared absorption spectrum to be no more than 0.90.
In addition, in the denitration catalyst, it is preferable for a ratio of tetravalent vanadium relative to overall vanadium from a catalyst surface to 2 nm which is a photoelectron escape depth detected by X-ray photoelectron spectroscopy to be at least 0.20.
In addition, in the denitration catalyst, it is preferable for a ratio (P1/P3) of a peak intensity P1 of wavenumber 450 to 550 $cm^{-1}$ originating from crosslinked $V-O_B-V$ bending vibration, relative to a peak intensity P3 of wavenumber 590 to 670 $cm^{-1}$ originating from edge-shaped $3V-O_C$ bending vibration to be no more than 1.6.

In addition, the denitration catalyst is preferably used in denitration at 270°C or lower.

In addition, the present invention relates to a production method for the denitration catalyst, including a step of mixing vanadate and a chelate compound, and firing at a temperature of 270°C or lower.

Effects of the Invention

A denitration catalyst according to the present invention has better denitration efficiency at low temperature compared to the conventional technology, upon the selective catalytic reduction reaction with ammonia as the reductant.

BRIEF DESCRIPTION OF THE DRAWINGS

FIG. 1A is a graph showing the NO conversion rates of catalysts according to each of the Examples and Comparative Examples;
FIG. 1B is a graph showing the chronological change in NO conversion rate of the catalyst according to Example 2;
FIG. 2A is a TEM image of the catalyst according to Example 1;
FIG. 2B is a TEM image of the catalyst according to Example 1;
FIG. 2C is a TEM image of the catalyst according to Example 2;
FIG. 2D is a TEM image of the catalyst according to Example 2;
FIG. 2E is a TEM image of the catalyst according to Example 3;
FIG. 2F is a TEM image of the catalyst according to Example 3;
FIG. 2G is a TEM image of the catalyst according to Example 4;
FIG. 2H is a TEM image of the catalyst according to Example 4;
FIG. 21 is a TEM image of the catalyst according to Comparative Example 1;

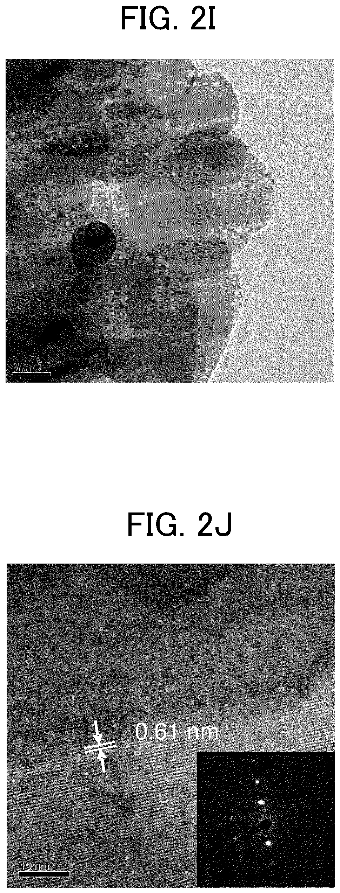

FIG. 2J is a TEM image of the catalyst according to Comparative Example 1;

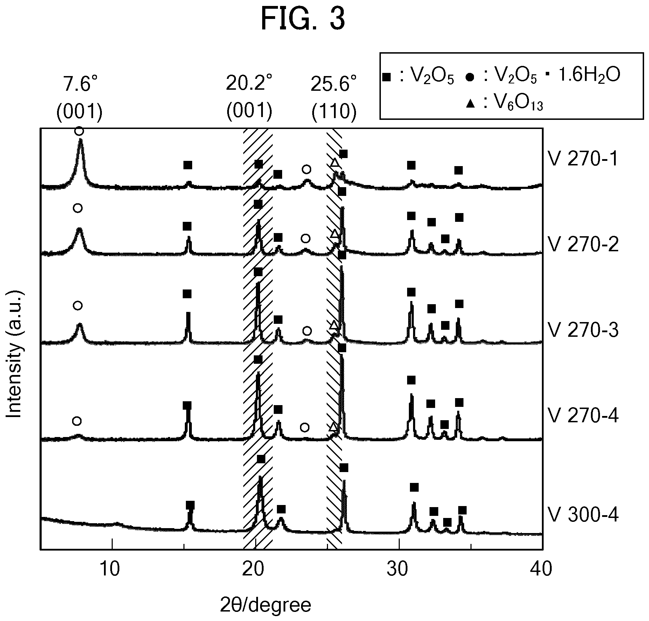

FIG. 3 is a graph showing a powder XRD pattern of each of the Examples;

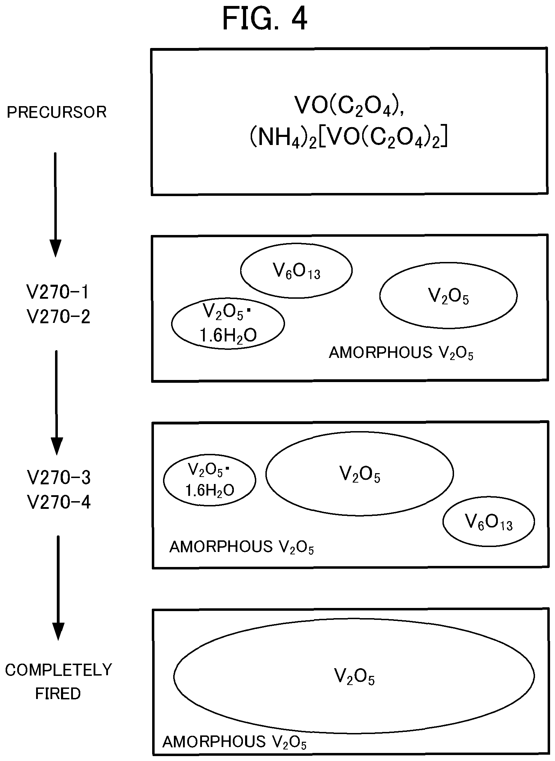

FIG. 4 is a view showing an outline of the change in internal structure in the case of firing $(NH_4)_2[VO\,(C_2O_4)_2]$ and $VO(C_2O_4)$;

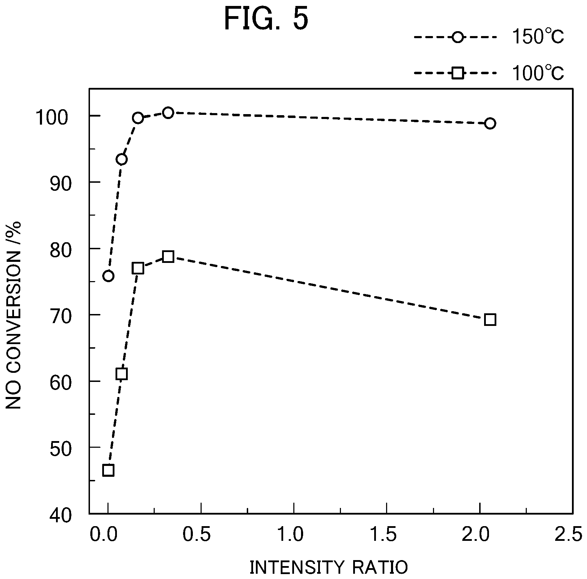

FIG. 5 is a graph showing the relationship between intensity ratio and NO conversion rate of the catalyst according to each of the Examples and Comparative Examples;

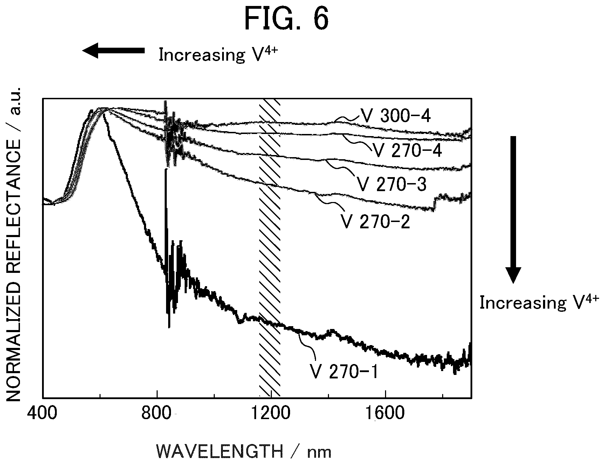

FIG. 6 is a graph showing the UV-Vis-NIR spectra of the catalyst according to each of the Examples and Comparative Examples;

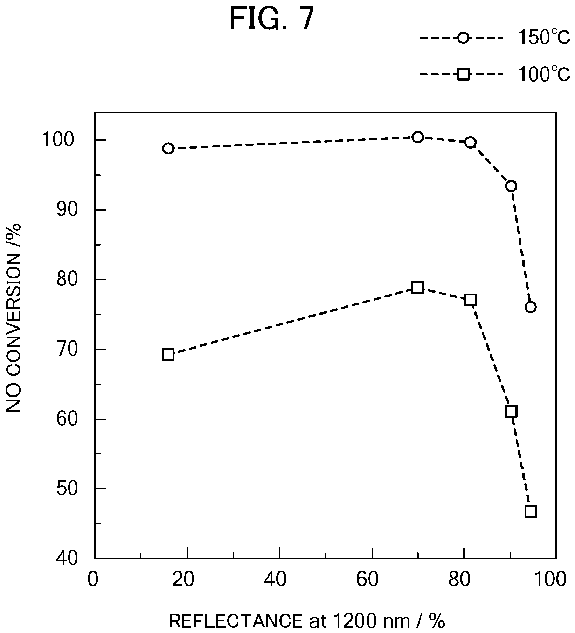

FIG. 7 is a graph showing the relationship between reflectance of wavelength 1200 nm and NO conversion rate of the catalysts according to each of the Examples and Comparative Examples;

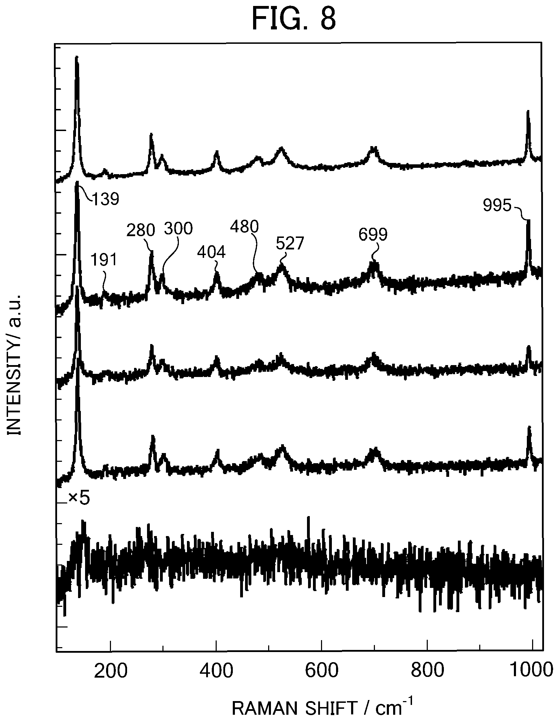

FIG. 8 is a graph showing the Raman spectra of the catalysts according to each of the Examples and Comparative Examples;

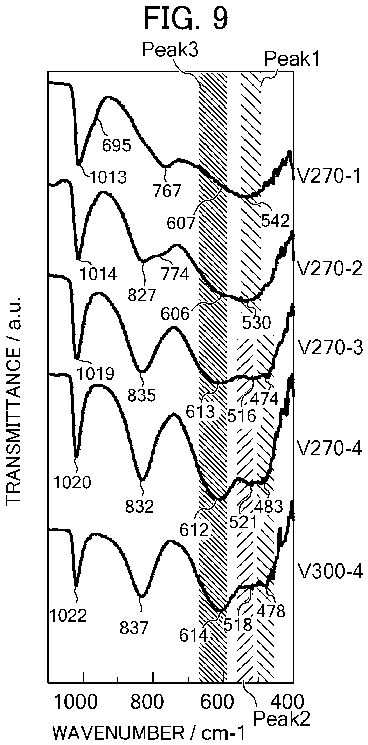

FIG. 9 is a graph showing the spectral curves obtained by measuring the infrared absorption spectra of the catalysts according to each of the Examples and Comparative Examples;

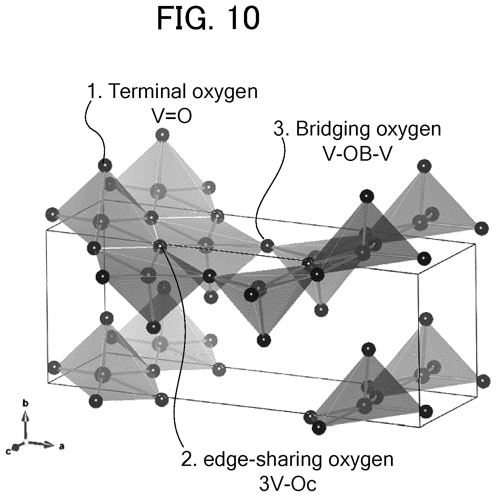

FIG. 10 is a view showing the crystal structures of vanadium pentoxide according to each of the Examples;

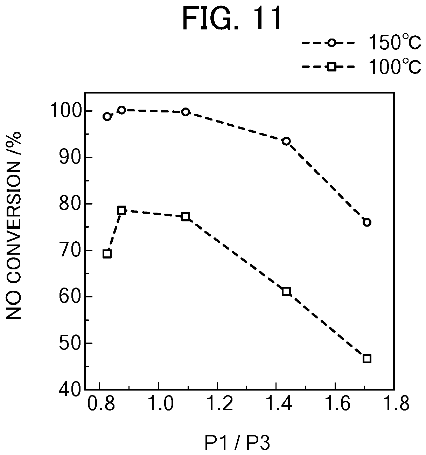

FIG. 11 is a graph establishing the ratio of P1/P3 as the horizontal axis, and establishing the NO conversion rate as the vertical axis for each of the Examples and Comparative Examples;

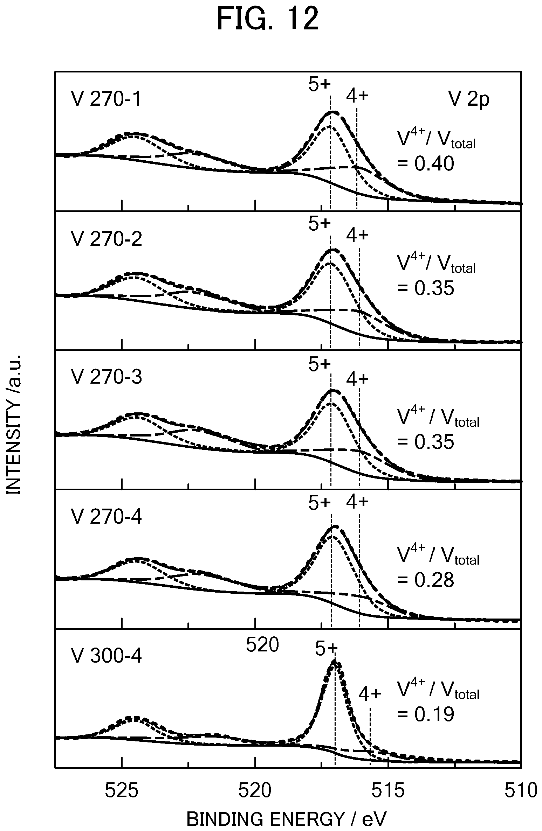

FIG. 12 is a graph showing the XPS spectra in the V2p region of the catalyst according to each of the Examples and Comparative Examples; and

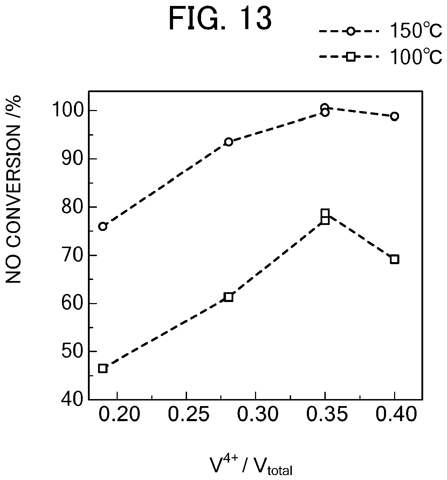

FIG. 13 is a graph establishing the proportion tetravalent vanadium in the overall vanadium of the surface of the catalysts according to each of the Examples and Comparative Examples as the horizontal axis and the NO conversion rate as the vertical axis.

PREFERRED MODE FOR CARRYING OUT THE INVENTION

Hereinafter, embodiments of the present invention will be explained.

The denitration catalyst of the present invention is a denitration catalyst containing vanadium oxide, in which this vanadium oxide includes vanadium pentoxide, and has defect sites at which oxygen atoms are deficient in the crystal structure of this vanadium pentoxide.
Such a denitration catalyst can exhibit a high denitration effect even under a low temperature environment, compared to a denitration catalyst such as a vanadium/titanium catalyst which is conventionally used.

Firstly, the denitration catalyst of the present invention contains vanadium oxide.
This vanadium oxide includes vanadium oxide (II) (VO), vanadium trioxide (III) ($V_2O_3$), vanadium tetroxide (IV) ($V_2O_4$),

and vanadium pentoxide (V) ($V_2O_5$), and the V element of vanadium pentoxide ($V_2O_5$) may assume the pentavalent, tetravalent, trivalent and divalent form in the denitration reaction.

It should be noted that this vanadium oxide is a main component of the denitration catalyst of the present invention, and may contain other substances within a range no inhibiting the effects of the present invention; however, it is preferably present in at least 50 wt% by vanadium pentoxide conversion, in the denitration catalyst of the present invention.

More preferably, the vanadium oxide preferably exists in at least 65 wt% by vanadium pentoxide conversion.

More preferably, vanadium oxide is preferably present in at least 90 wt% by vanadium pentoxide conversion, in the denitration catalyst of the present invention.

Secondly, the denitration catalyst of the present invention has defect sites at which oxygen atoms are deficient in the crystal structure of vanadium pentoxide included in the above-mentioned vanadium oxide.

It should be noted that, herein, "defect site" indicates being a position (site) at which a certain type of atom is not occupied, while being a position (site) which be occupied by this certain atom in the crystal.

In the denitration catalyst of the present invention, the structure of the vanadium pentoxide crystal contained in this denitration catalyst is locally disordered due to firing at a relatively low temperature, and can exhibit high denitration effect; however, above all, it is assumed that a high denitration effect is exhibited by sites appearing at which oxygen atoms are deficient in the crystal structure of vanadium pentoxide.

It should be noted that "site at which oxygen atoms are deficient" is also abbreviated as "oxygen defect site".

It should be noted that, herein, "having a defect site at which oxygen atoms are deficient" may be the matter of the intensity ratio of peak intensity ($P_{6-13}$) on the (110) plane of $V_6O_{13}$, relative to the peak intensity ($P_{2-5}$) on the (001) plane of $V_2O_5$, detected by powder X-ray diffraction method, being at least 0.08 and no more than 2.05, as disclosed in the Examples described later.

In addition, the denitration catalyst of the present invention has a state in which the degree of crystallinity declines due to the existence of vanadium pentoxide in which the crystal structure of vanadium pentoxide included in the above-mentioned vanadium oxide contains crystal water.

In the denitration catalyst of the present invention, the structure of the vanadium pentoxide crystal included in this denitration catalyst is locally disordered by firing at relatively low temperature, and can exhibit high denitration effect; however, by the crystal structure of vanadium pentoxide and crystal water-containing vanadium pentoxide coexisting, it is assumed that high denitration effect is exhibited by inhibiting growth of vanadium pentoxide crystals, and generating a local disorder in the structure of the vanadium pentoxide crystal.

In the embodiment of the present invention, in the selective catalytic reduction reaction using the denitration catalyst in which the intensity ratio ($P_{V6O13}/P_{V2O5}$) of the peak intensity ($P_{V6O13}$) of the (110) plane of $V_6O_{13}$ relative to the peak intensity ($P_{V2O5}$) of the (001) plane of $V_2O_5$ detected by powder X-ray diffraction method of the denitration catalyst being at least 0.08 and no more than 2.05, for example, it exhibited a NO conversion rate of 61% to 79% at the reaction temperature of 100°C, and a NO conversion rate of 93% to 100% at the reaction temperature of 150°C.

On the other hand, in the selective catalytic reduction reaction using the denitration catalyst in which the intensity ratio ($P_{V6O13}/P_{V2O5}$) of the peak intensity ($P_{V6O13}$) of the (110) plane of $V_6O_{13}$ relative to the peak intensity ($P_{V2O5}$) of the (001) plane of $V_2O_5$ detected by powder X-ray diffraction method of the denitration catalyst being 0.00, it only exhibited a NO conversion rate of 47% at the reaction temperature of 100°C, and a NO conversion rate of 76% at the reaction temperature of 150°C.

In addition, the intensity ratio ($P_{V6O13}/P_{V2O5}$) of the peak intensity ($P_{V6O13}$) of the (110) plane of $V_6O_{13}$ relative to the peak intensity ($P_{V2O5}$) of the (001) plane of $V_2O_5$ detected by powder X-ray diffraction method of the denitration catalyst is preferably at least 0.08 and no more than 2.05; however, more preferably, it may be at least 0.16 and no more than 2.05.

More preferably, it may be at least 0.16 and no more than 0.32.

In addition, herein, "having a defect site at which oxygen atoms are deficient" may be the matter of reflectance at a wavelength 1200 nm normalized with reflectance at wavelength 600 nm as 1 in ultraviolet-visible near-infrared absorption spectrum being no more than 0.90, as disclosed in the Examples described later.

In the embodiment of the present invention, for example, in the selective catalytic reduction reaction using a denitration catalyst having a reflectance at a wavelength 1200 nm normalized with reflectance at a wavelength 600 nm as 1 in ultraviolet-visible near-infrared absorption spectrum of at least 0.157 and no more than 0.901, it exhibited a NO conversion rate of 61% to 79% at a reaction temperature of 100°C, and a NO conversion rate of 93% to 100% at a reaction temperature of 150°C.

On the other hand, in the selective catalytic reduction reaction using a denitration catalyst having a reflectance at a wavelength 1200 nm normalized with reflectance at a wavelength 600 nm as 1 in ultraviolet-visible near-infrared absorption spectrum of 0.943, it only exhibited a NO conversion rate of 47% at a reaction temperature of 100°C, and a NO conversion rate of 76% at a reaction temperature of 150°C.

In addition, the reflectance of wavelength 1200 nm normalized with reflectance of wavelength 600 nm as 1 in ultraviolet-visible near-infrared absorption spectrum is preferably no more than 0.90; however, more preferably, it may be at last 0.157 and no more than 0.901.

More preferably, it may be at least 0.157 and no more than 0.813. More preferably, it may be at least 0.700 and no more than 0.813.

In addition, herein, "having a defect site at which oxygen atoms are deficient" may be the matter of the ratio of tetravalent vanadium relative to overall vanadium of the catalyst surface detected by X-ray photoelectron spectroscopy being at least 0.20, as disclosed in the Examples described later.

In the embodiment of the present invention, in the selective catalytic reduction reaction using a denitration catalyst having a ratio of tetravalent vanadium relative to overall vanadium at the catalyst surface detected by X-ray photoelectron spectroscopy of at least 0.28 and no more than 0.40, for example, it exhibited a NO conversion rate of 61% to 79% at a reaction temperature of 100°C, and a NO conversion rate of 93% to 100% at a reaction temperature of 150°C.

On the other hand, in the selective catalytic reduction reaction using a denitration catalyst having a ratio of tetravalent vanadium relative to overall vanadium at the catalyst surface detected by X-ray photoelectron spectroscopy of 0.19, it only exhibited a NO conversion rate of 47% at a reaction temperature of 100°C, and a NO conversion rate of 76% at a reaction temperature of 150°C.

In addition, the ratio of tetravalent vanadium relative to overall vanadium at the catalyst surface detected by X-ray photoelectron spectroscopy is preferably at least 0.20; however, more preferably, it may be at least 0.28 and no more than 0.40. More preferably, it may be at least 0.35 and no more than 0.40.

In addition, herein, "having a defect site at which oxygen atoms are deficient" may refer to the ratio (P1/P3) of the peak intensity P1 of wavenumber 450 to 550 $cm^{-1}$ originating from crosslinked $V-O_B-V$ bending vibration, relative to the peak intensity P3 of wavenumber 590 to 670 $cm^{-1}$ originating from edge-sharing $3V-O_c$ bending vibration, as described in the Examples later being no more than 1.6.

The wavenumber for calculating this "P1/P3" is the wavenumber in a case of the beginning to the end of the peak; however, in the case of calculating using the wavenumber of the peak top, it may be calculated as the ratio (P1/P3) of the peak intensity P1 of wavenumber 474 to 542 $cm^{-1}$ originating from the crosslinked $V-O_B-V$ bending vibration, relative to the peak intensity P3 of wavenumber 604 to 612 $cm^{-1}$ originating from edge-sharing $3V-O_c$ bending vibration.

In the embodiment of the present invention, for example, in the selective catalytic reduction reaction using a denitration catalyst having a ratio (P1/P3) of the peak intensity P1 of wavenumber 450 to 550 $cm^{-1}$ originating from the crosslinked $V-O_B-V$ bending vibration, relative to the peak intensity P3 of wavenumber 590 to 670 $cm^{-1}$ originating from edge-sharing $3V-O_c$ bending vibration of 0.83 to 1.43, it exhibited a NO conversion rate of 61% to 79% at the reaction temperature of 100°C, and exhibited a NO conversion rate of 93% to 100% at the reaction temperature of 150°C.

On the other hand, in the selective catalytic reduction reaction using a denitration catalyst having a ratio (P1/P3) of the peak intensity P1 of wavenumber 450 to 550 $cm^{-1}$ originating from the crosslinked $V-O_B-V$ bending vibration, relative to the peak intensity P3 of wavenumber 590 to 670 $cm^{-1}$ originating from edge-sharing $3V-O_c$ bending vibration of 1.71, it only exhibited a NO conversion rate of 47% at the reaction temperature of 100°C, and exhibited a NO conversion rate of 76% at the reaction temperature of 150°C.

In addition, the ratio (P1/P3) of the peak intensity P1 of wavenumber 450 to 550 $cm^{-1}$ originating from the crosslinked $V-O_B-V$ bending vibration, relative to the peak intensity P3 of wavenumber 590 to 670 $cm^{-1}$ originating from edge-sharing $3V-O_c$ bending vibration is preferably no more than 1.6; however, more preferably, it may be at least 0.83 and no more than 1.43.

More preferably, it may be at least 0.83 and no more than 1.09.

More preferably, it may be at least 0.87 and no more than 1.09.

Furthermore, the denitration catalyst of the present invention may have a line defect in which point defects such as the "defect site at which an oxygen atoms are deficient occurs" are continuously arranged one-dimensionally, a plane defect in which the point defects are continuously arranged two-dimensionally, or a lattice defect such as lattice strain, for example.

In addition, the denitration catalyst of the present invention is preferably used in denitration at 270°C or lower. This is derived from the firing temperature of denitration catalyst of the present invention being 270°C.

On the other hand, in the Examples described later, the denitration catalyst of the present invention exhibits high denitration effect in the selective catalytic reduction reaction at the reaction temperature of 200°C or lower, and thus the denitration catalyst of the present invention is capable of use in denitration at 200°C or lower.

Since oxidation from $SO_2$ to $SO_3$ does not occur at 200°C or less, during the selective catalytic reduction reaction, oxidation of $SO_2$ to $SO_3$ is thereby not accompanied, as in the knowledge obtained by the above Patent Document 2.

In addition, in the aforementioned disclosure, the denitration catalyst of the present invention is preferably used in denitration at 270°C or lower; however, it may be preferably used in denitration at 200°C or lower, and even more preferably, it may be used in denitration with a reaction temperature of 100 to 200°C.

More preferably, it may be used in denitration with a reaction temperature of 160 to 200°C.

Alternatively, it may be used in denitration with a reaction temperature of 80 to 150°C.

The denitration catalyst containing vanadium oxide, and having a defect site at which oxygen atoms are deficient occurs in the crystal structure of vanadium pentoxide included in this vanadium oxide can be prepared by the sol gel method for the most part.

The sol gel method includes a step of mixing vanadate and chelate compound, and firing after dissolving this mixture in pure water. As the vanadate, for example, ammonium vanadate, magnesium vanadate, strontium vanadate, barium vanadate, zinc vanadate, lead vanadate, lithium vanadate, etc. may be used.

In addition, as the chelate compound, for example, that having a plurality of carboxyl groups such as oxalic acid and citric acid, that having a plurality of amino groups such as acetylacetonate and ethylenediamine, that having a plurality of hydroxyl groups such as ethylene glycol, etc. may be used.

It should be noted that, in the present embodiment, after dissolving the vanadate in chelate compound and drying, it is fired at a temperature of 270°C or less.

In the embodiment of the present invention, the denitration catalyst produced by the method including a step of dissolving ammonium vanadate in an oxalic acid aqueous solution, and a step of subsequently drying, and then firing at a temperature of 270°C, exhibited a NO conversion rate of 61 to 79% at a reaction temperature of 100°C, and exhibited a NO conversion rate of 93 to 100% at a reaction temperature of 150°C.

On the other hand, as a denitration catalyst produced by a method differing from such a process, for example, a denitration catalyst produced by a method including a step of dissolving ammonium vanadate in an oxalic acid aqueous solution, and a step of subsequently drying, and then firing at a temperature of 300°C for 4 hours only exhibited a NO conversion rate of 47% at a reaction temperature of 100°C, and exhibited a NO conversion rate of 76% at a reaction temperature of 150°C.

The denitration catalyst prepared in this way is normally a denitration catalyst containing vanadium oxide, in which this vanadium oxide includes vanadium pentoxide, and has a defect site at which an oxygen deficiency occurs in the crystal structure of this vanadium pentoxide.

According to the denitration catalyst related to the above-mentioned embodiment, the following effects are exerted.

(1) As mentioned above, in the denitration catalyst according to the above embodiment, the denitration catalyst contains vanadium oxide, in which this vanadium oxide includes vanadium pentoxide, and has a defect site at which oxygen atoms are deficient in the crystal structure of this vanadium pentoxide.

By using this denitration catalyst, upon the selective catalytic reduction reaction with ammonia as the reductant, it is possible to exhibit an effect whereby the denitration efficiency is even higher at low temperature, compared to the conventional technology.

(2) As mentioned above, in the denitration catalyst according to the above embodiment, an intensity ratio of peak intensity ($P_{v6O13}$) of a (110) plane of $V_6O_{13}$ relative to peak intensity ($P_{V2O5}$) of a (001) plane of $V_2O_5$ detected by powder X-ray diffraction is preferably at least 0.08 and no more than 2.05.

For the denitration catalyst according to the above embodiment, the adsorption of NO tends to occur, and can thereby exhibit higher NO conversion rate.

(3) As mentioned above, in the denitration catalyst according to the above embodiment, reflectance at wavelength 1200 nm normalized with reflectance at wavelength 600 nm as 1 in the ultraviolet-visible near-infrared absorption spectrum is preferably no more than 0.90. For the denitration catalyst according to the above embodiment, the adsorption of NO tends to occur, and can thereby exhibit higher NO conversion rate.

(4) As mentioned above, in the denitration catalyst according to the above embodiment, a ratio of tetravalent vanadium relative to overall vanadium of a catalyst surface detected by X-ray photoelectron spectroscopy is preferably at least 0.20.

For the denitration catalyst according to the above embodiment, the adsorption of NO tends to occur, and can thereby exhibit higher NO conversion rate.

(5) As mentioned above, in the denitration catalyst according to the above embodiment, a ratio (P1/P3) of a peak intensity P1 of wavenumber 450 to 550 cm$^{-1}$ originating from crosslinked V-$O_B$-V bending vibration, relative to a peak intensity P3 of wavenumber 590 to 670 cm$^{-1}$ originating from edge-shaped 3V-$O_c$ bending vibration is preferably no more than 1.6.

For the denitration catalyst according to the above embodiment, the adsorption of NO tends to occur, and can thereby exhibit higher NO conversion rate.

(6) As mentioned above, the denitration catalyst according to the above embodiment is preferably used in denitration at 270°C or lower. In the selective catalytic reduction reaction using the denitration catalyst according to the above embodiment, high denitration effect is brought about without causing the $SO_2$ to oxidize.

(7) As mentioned above, a production method for the denitration catalyst according to the above embodiment preferably includes a step of mixing vanadate and a chelate compound, and firing at a temperature of 270°C or lower. The denitration catalyst according to the above embodiment thereby has a defect site at which an oxygen deficiency occurs, and the denitration effect in the selective catalytic reduction reaction using the denitration catalyst according to the above embodiment improves.

It should be noted that the present invention is not to be limited to the above embodiment, and that modifications, improvements, etc. within a scope that can achieve the object of the present invention are also encompassed by the present invention.

EXAMPLES

Hereinafter, Examples of the present invention will be specifically explained together with Comparative Examples. It should be noted that the present invention is not limited to these Examples.

<1 Each Example and Comparative Example>

[Example 1]

Ammonium vanadate was dissolved in an oxalic acid aqueous solution.
Herein, the molar ratio of ammonium vanadate : oxalic acid is 1:3. After completely dissolving, the moisture in the solution was evaporated on a hot stirrer, and was dried overnight at 120°C in a dryer.
Subsequently, the dried powder was fired for 1 hour at 270°C in air. The fired vanadium pentoxide was defined as the denitration catalyst of Example 1.
It should be noted that the sample name of this denitration catalyst of Example 1 was set as "V270-1".

[Example 2]

Ammonium vanadate was dissolved in a oxalic acid aqueous solution.
Herein, the molar ratio of ammonium vanadate : oxalic acid is 1:3. After completely dissolving, the moisture in the solution was evaporated on a hot stirrer, and dried overnight at 120°C in a dryer. Subsequently, the dried powder was fired for 2 hours at 270°C in air. The dried vanadium pentoxide was defined as the denitration catalyst of Example 2.
It should be noted that the sample name of this denitration catalyst of Example 2 was set as "V270-2".

[Example 3]

Ammonium vanadate was dissolved in a oxalic acid aqueous solution.
Herein, the molar ratio of ammonium vanadate : oxalic acid is 1:3. After completely dissolving, the moisture in the solution was evaporated on a hot stirrer, and dried overnight at 120°C in a dryer. Subsequently, the dried powder was fired for 3 hours at 270°C in air. The dried vanadium pentoxide was defined as the denitration catalyst of Example 3.
It should be noted that the sample name of this denitration catalyst of Example 3 was set as "V270-3".

[Example 4]

Ammonium vanadate was dissolved in a oxalic acid aqueous solution.
Herein, the molar ratio of ammonium vanadate : oxalic acid is 1:3. After completely dissolving, the moisture in the solution was evaporated on a hot stirrer, and dried overnight at 120°C in a dryer. Subsequently, the dried powder was fired for 4 hours at 270°C in air. The dried vanadium pentoxide was defined as the denitration catalyst of Example 4.
It should be noted that the sample name of this denitration catalyst of Example 4 was set as "V270-4".

[Comparative Example 1]

Ammonium vanadate was dissolved in a oxalic acid aqueous solution.
Herein, the molar ratio of ammonium vanadate : oxalic acid is 1:3. After completely dissolving, the moisture in the solution was evaporated on a hot stirrer, and dried overnight at 120°C in a dryer. Subsequently, the dried powder was fired for 4 hours at 300°C in air. The dried vanadium pentoxide was defined as the denitration catalyst of Comparative Example 1.
It should be noted that the sample name of this denitration catalyst of Comparative Example 1 was set as "V300-4".
It should be noted that this Comparative Example 1 is a denitration catalyst disclosed in Patent Document 2 noted above.

<2. Evaluation>

<2.1 NO Conversion Rate>

(Measurement Method 1)

Under the conditions of Table 1 below, the $NH_3$-SCR reaction was carried out using a fixed bed flow-type reactor at a reaction temperature of 100 to 200°C.
In the gas passing through the catalyst layer, NO was analyzed by a Jasco FT-IR-4700.

[Table 1]

(Table 1) $NH_3$-SCR measurement conditions

| | |
|---|---|
| Reaction temperature | 100°C, 150°C |
| Catalyst amount | 0.375g |
| Gas flow rate | 250mlmin$^{-1}$ NO: 250ppm, $NH_3$: 250ppm, $O_2$: 4vol% in Ar, 2.3% $H_2O$ (steam atmosphere) |
| Space velocity | 40,000 mLh$^{-1}$g$_{cat}$$^{-1}$ |

In addition, the NO conversion rate was calculated by Formula (1) noted below.
It should be noted that $No_{in}$ is the NO concentration at the reaction tube inlet, and $NO_{out}$ is the NO concentration of the reaction tube outlet.
Formula 1

$$\text{NO conversion rate } [\%] = \frac{\text{NO}_{in} - \text{NO}_{out}}{\text{NO}_{in}} \times 100 \quad (\text{Formula 1})$$

(Measurement Results 1)

Table 2 shows the NO conversion rates of each vanadium pentoxide catalyst for both a case of a reaction temperature of 100°C and a case of a reaction temperature of 150°C.

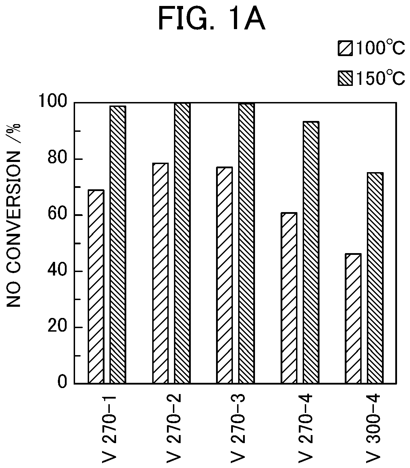

FIG. 1A is a plot graphing this Table 2.

[Table 2]

(Table 2) NO conversion rate of vanadium catalyst

| Sample | | NO conversion | rate/% |
|---|---|---|---|
| | | 100°C | 150°C |
| Example 1 | (V270-1) | 69 | 99 |
| Example 2 | (V270-2) | 79 | 100 |
| Example 3 | (V270-3) | 77 | 100 |
| Example 4 | (V270-4) | 61 | 93 |
| Comparative Example 1 | (V300-4) | 47 | 76 |

In both a case of a reaction temperature of 100°C and a case of a reaction temperature of 150°C, the denitration catalyst of the Examples exhibited a higher NO conversion rate than the denitration catalyst of the Comparative Example.
Above all, the denitration catalysts fired for 2 to 3 hours at 270°C exhibited a high NO conversion rate.
Thereamong, Example 2 (V270-2) exhibited the highest NO conversion rate.

(Measurement Method 2)

Under the conditions of a reaction temperature of 150°C in Table 1 above, using the catalyst of Example 2 (V270-2), the $NH_3$-SCR reaction was carried out over 80 hours by the same method as measurement method 1, under conditions in which moisture is not coexisting (dry) and 2.3 vol% moisture coexistence (2.3 vol% water).

(Measurement Results 2)

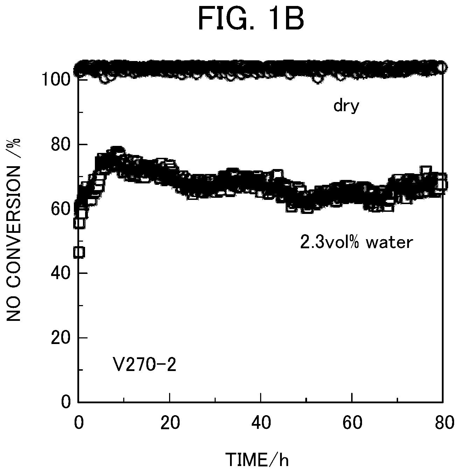

FIG. 1B is a graph showing the change in NO conversion rate at 80 hours of the catalyst of Example 2 (V270-2). As is evident from the graph of FIG. 1B, the NO conversion rate of the catalyst of Example 2 (V270-2) showed stable numerical values over at least 80 hours in both the condition in which moisture does not coexist, and under moisture coexistence.

<2.2 TEM Images>

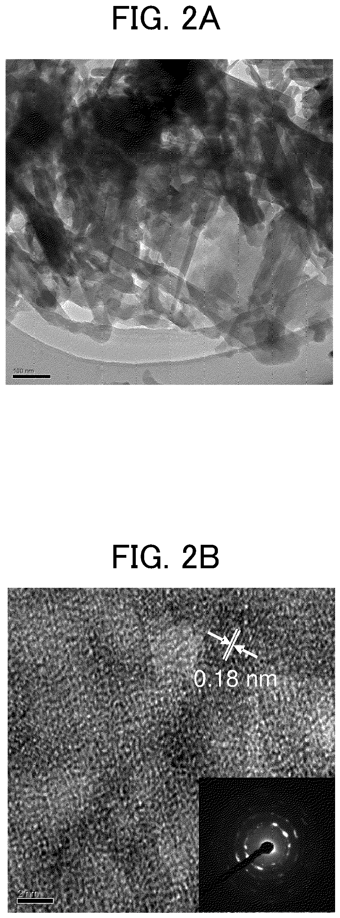

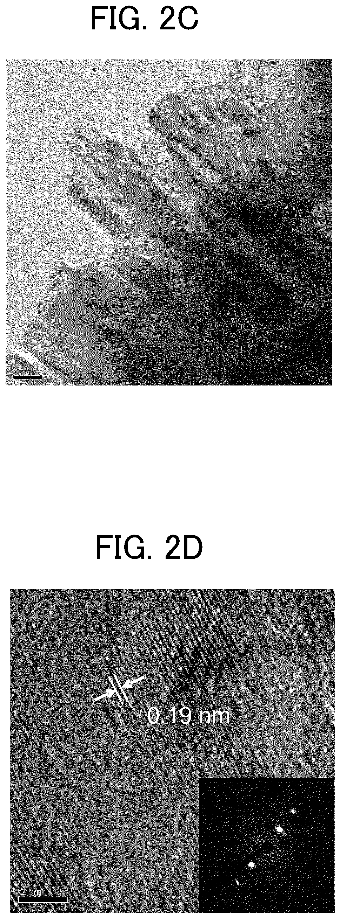

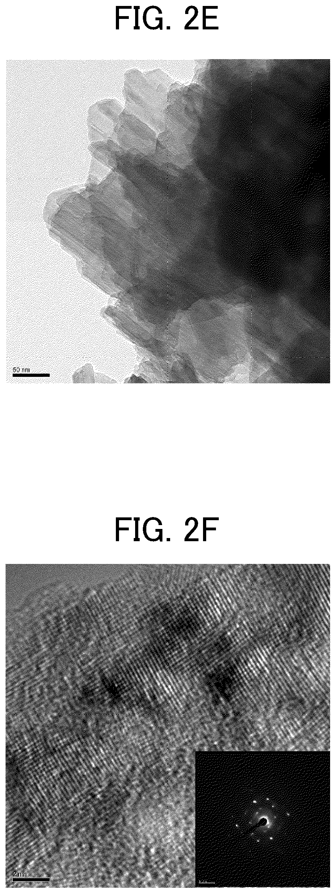

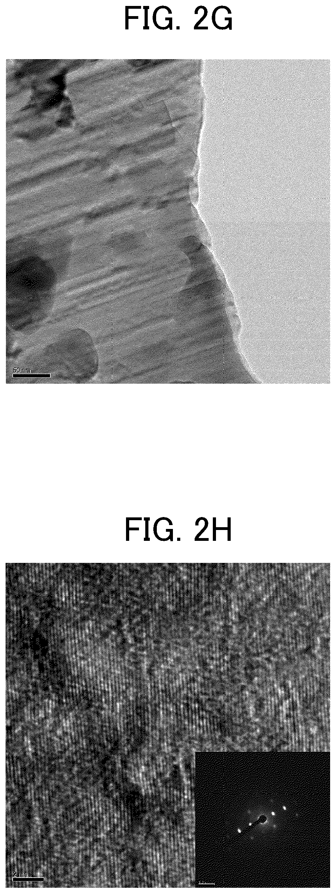

FIGS. 2A and 2B show TEM images of Example 1 (V270-1).
It should be noted that FIG. 2A is a TEM image of 140,000 times magnification, and FIG. 2B is a TEM image of 1,400,000 times magnification.
In addition, FIGS. 2C and 2D show TEM images of Example 2 (V270-2). It should be noted that FIG. 2C is a TEM image of 140,000 times magnification, and FIG. 2D is a TEM image of 1,400,000 times magnification.
In addition, FIGS. 2E and 2F show TEM images of Example 3 (V270-3). It should be noted that FIG. 2E is a TEM image of 140,000 times magnification, and FIG. 2F is a TEM image of 1,400,000 times magnification.
In addition, FIGS. 2G and 2H show TEM images of Example 4 (V270-4).
It should be noted that FIG. 2G is a TEM image of 140,000 times magnification, and FIG. 2H is a TEM image of 1,400,000 times magnification.
On the other hand, FIGS. 21 and 2J show TEM images of Comparative Example 1 (V300-4).
It should be noted that FIG. 21 is a TEM image of 140,000 times magnification, and FIG. 2J is a TEM image of 1,400,000 times magnification.
It should be noted that the images in the lower right included in each image of FIGS. 2B, 2D, 2F, 2H and 2I show electron diffraction patterns of vanadium oxide catalysts.
From these images, it was clarified that a crystalline portion and amorphous portion exist in the crystal structure of the Examples.

<2.3 Powder X-ray Diffraction>

(Measurement Method)

As powder X-ray diffraction, measurement was performed using Cu-K$\alpha$ by a Rigaku Smart Lab.

(Measurement Results)

FIG. 3 shows the powder XRD (X-Ray Diffraction) patterns of Example 1 (V270-1), Example 2 (V270-2), Example 3 (V270-3) and Example 4 (V270-4).
Mainly, a peak of the (001) plane of $V_2O_5 \cdot 1.6H_2O$ was found at $2\theta=7.6°$, a peak of the (001) plane of $V_2O_5$ was found at $2\theta=20.2°$, and a peak of the (110) plane of $V_6O_{13}$ was found at $2\theta=25.6°$.
FIG. 4 is a view showing an outline of the change in internal structure in the case of firing $VO_2(C_2O_4)$, which is the precursor. At the stage of firing at 270°C for 1 to 2 hours, $V_2O_5 \cdot 1.6H_2O$, $V_6O_{13}$ and $V_2O_5$ are mainly generated in the denitration catalyst, and a component other than these is amorphous $V_2O_5$.
Subsequently, at the stage of firing at 270°C for 3 to 4 hours, $V_2O_5$, $V_2O_5 \cdot 1.6H_2O$, and $V_6O_{13}$ are mainly generated in the denitration catalyst, and a component other than these is amorphous $V_2O_5$.
Eventually, at the stage completely fired, $V_2O_5$ is mainly generated in the denitration catalyst, and a component other than these is amorphous $V_2O_5$.
Therefore, for each catalyst, the intensity ratio ($P_{6-13}/P_{2-5}$) of the peak intensity ($P_{6-13}$) of the (110) plane of $V_6O_{13}$ relative to the peak intensity ($P_{2-5}$) of the (001) plane of $V_2O_5$ was calculated, and this was set as an index of each catalyst.
Table 3 shows the intensity ratio of each vanadium catalyst, and the NOx conversion rates for both the case of a reaction temperature of 100°C and the case of a reaction temperature of 150°C.
FIG. 5 is a plot graphing this Table 3.

[Table 3]

(Table 3) NO conversion rate of vanadium catalyst

| Sample | | Intensity Ratio | NO conversion rate/% | |
|---|---|---|---|---|
| | | | 100°C | 150°C |
| Example 1 | (V270-1) | 2.05 | 69 | 99 |
| Example 2 | (V270-2) | 0.32 | 79 | 100 |
| Example 3 | (V270-3) | 0.16 | 77 | 100 |
| Example 4 | (V270-4) | 0.08 | 61 | 93 |
| Comparative Example 1 | (V300-4) | 0.00 | 47 | 76 |

From Table 3 and FIG. 5, it was found that the catalysts according to the Examples having an intensity ratio of at least 0.07 exhibited higher NO conversion rate than the Comparative Example.

<2.4 UV-Vis-NIR Spectra>

(Measurement Method)

The color of the vanadium catalyst itself according to the above Examples and Comparative Examples changes from green to yellow as firing progresses.
Therefore, for each catalyst, UV-Vis-NIR spectra was calculated using a diffuse reflection microscope.
In more detail, a sample of each catalyst was filled into a sample holder including a white sheet of barium sulfate, and UV-Vis-NIR spectra were measured by the diffuse reflectance method.
As the measuring apparatus, a UV-3100PC UV-visible spectrophotometer manufactured by Shimadzu was used.

(Measurement Results)

FIG. 6 shows, as the UV-Vis-NIR spectra for each catalyst, a graph establishing the wavelength as the horizontal axis, and establishing the reflectance normalizing the reflectance of wavelength 600 nm as 1 as the vertical axis.
According to the graph of FIG. 6, it was shown that the value of reflectance dropped within a wide range of wavelengths after 600 nm, as the tetravalent vanadium increased.
It should be noted that Table 4 below shows the absorption edge wavelength of each catalyst and the reflectance of wavelength 1200 nm.

[Table 4]

(Table 4) Absorption edge wavelength and reflectance of vanadium catalyst

| Sample | | Absorption edge | Reflectance of 1200 nm |
|---|---|---|---|
| | | /nm | /% |
| Example 1 | (V270-1) | 537.4 | 15.7 |
| Example 2 | (V270-2) | 547.0 | 70.0 |
| Example 3 | (V270-3) | 547.0 | 81.3 |
| Example 4 | (V270-4) | 554.7 | 90.1 |
| Comparative Example 1 | (V300-4) | 537.4 | 94.3 |

FIG. 7 is a graph showing the relationship between the reflectance of wavelength 1200 nm of each catalyst and the NO conversion rate. For both a case of a reaction temperature of 100°C and a case of a reaction temperature of 150°C, the NO conversion rates of catalysts according to the Examples having a reflectance of no more than 0.90 exhibited a higher value than the NO conversion rate of the catalyst according to the Comparative Example having a reflectance exceeding 0.90.

<2.5 Raman Spectra>

(Measurement Method)

In order to analyze the crystal structure of each catalyst, the Raman spectra was measured by Raman spectroscopy.

In more detail, a small amount of a sample of each catalyst was placed on a slide of glass, and the Raman spectra were measured by a Raman spectroscopic device.

As the measurement apparatus, an NRS-4100 Raman spectrophotometer manufactured by JASCO Corp. was used.

(Measurement Results)

FIG. 8 shows the Raman spectra of each catalyst.

From FIG. 8, the peaks originating from the crystal structure of each catalyst could be confirmed.

Above all, it showed that there is a defect portion and a site of $V^{4+}$ in the crystal structure of each catalyst according to the Examples.

<2.6 Infrared Absorption Spectra>

(Measurement Method)

The infrared absorption spectra of each catalyst was measured. It should be noted that, upon measurement, 1 mg of sample of each catalyst and 10 mg of potassium bromide were mixed, and molded by pressurizing by a tablet molding machine.

Furthermore, infrared absorption spectra was measured by the transmission method using a TGS detector.

As the measurement apparatus, an FT/IR-6100 infrared spectrometer manufactured by JASCO Corp. was used.

(Measurement Results)

FIG. 9 shows the spectral curve of each catalyst obtained as a result of measuring the infrared absorption spectra of the fingerprint region: 1150 to 400 $cm^{-1}$.

In addition, FIG. 10 shows crystal structures of vanadium pentoxide according to each of the Examples.

In the crystal structure of vanadium pentoxide, the terminal V=O (1 in FIG. 10), edge-shared $3V-O_c$ (2 in FIG. 10) and crosslinked $V-O_B-V$ (3 in FIG. 10) exist.

As shown in FIG. 9, the peak (Peak 1) originating from crosslinked $V-O_B-V$ bending vibration overlaps the peak (Peak 2) originating from edge-shared $3V-O_c$ stretching vibration.

Therefore, the ratio (P1/P3) of intensity P1 of the peak (Peak 1) of wavenumber 450 to 550 $cm^{-1}$ originating from the crosslinked $V-O_B-V$ bending vibration relative to intensity P3 of the peak (Peak 3) of wavenumber 590 to 670 $cm^{-1}$ originating from edge-shared $3V-O_c$ stretching vibration was calculated.

Table 5 below shows the wavenumber, transmittance and ratio of P1/P3 of each peak for every catalyst.

In addition, FIG. 11 is a graph establishing the ratio of P1/P3 in Table 5 as the horizontal axis, and establishing the NO conversion rate of each catalyst as the vertical axis.

[Table 5]

(Table 5) Wavenumber and transmittance of each catalyst

| Sample | | Peak3 | | Peak2 | | Peak1 | | P1/P3 |
|---|---|---|---|---|---|---|---|---|
| | | Wavenumber | transmittance (%) | Wavenumber | transmittance (%) | Wavenumber | transmittance (%) | |
| Example 1 | (V270-1) | 604 | 37.6 | | | 542 | 31.0 | 0.83 |
| Example 2 | (V270-2) | 606 | 28.6 | | | 530 | 25.0 | 0.87 |
| Example 3 | (V270-3) | 613 | 35.2 | 516 | 37.9 | 474 | 38.5 | 1. 09 |
| Example 4 | (V270-4) | 612 | 24.1 | 521 | 32.9 | 483 | 34.6 | 1.43 |
| Comparative Example 1 | (V300-4) | 614 | 27.9 | 518 | 47.0 | 478 | 47.7 | 1.71 |

As found from Table 5 and FIG. 11, according to the Examples, the catalysts according to the Examples having a P1/P3 of 1.6 or less showed a higher NO conversion rate than the catalyst according to the Comparative Example having a P1/P3 of 1.71.

<2.7 X-ray Photoelectron Spectrum (XPS)>

(Measurement Method)

For the catalysts according to each of the Examples and Comparative Example, the X-ray photoelectron spectrum (XPS) was measured in order to analyze the electronic state.
In more detail, powder samples of each catalyst of the Examples and Comparative Examples were fixed to a sample holder using carbon tape, and the X-ray photoelectron spectrum was measured.
As the measurement device, a JPS-9010MX photoelectron spectrometer manufactured by JEOL Ltd. was used.

(Measurement Results)

FIG. 12 shows the XPS spectra for the V2p region.
From FIG. 12, it is shown that there is a defect portion and $V^{4+}$ site in the crystal structure of each catalyst according to the Examples, similarly to FIG. 8.
In addition, the ratio of tetravalent vanadium relative to overall vanadium from the catalyst surface until 2 nm which is the photoelectron escape depth becomes 0.40 in Example 1, 0.35 in Example 2, 0.35 in Example 3, and 0.28 in Example 4. On the other hand, it was merely 0.19 in the Comparative Example.
FIG. 13 is a graph establishing the proportion of tetravalent vanadium in the overall vanadium of the catalyst surface of each of the Examples and Comparative Examples as the horizontal axis, and establishing the NO conversion rate as the vertical axis. It was shown that the NO conversion rates of the catalysts according to the Examples in which the proportion of tetravalent vanadium of the overall vanadium of the catalyst surface was at least 0.20 is higher than the NO conversion rate of the catalyst according to the Comparative Example in which the proportion of tetravalent vanadium of the overall vanadium of the catalyst surface was 0.19.
In the above way, a denitration catalyst containing vanadium oxide has a high denitration efficiency at low temperatures of 270°C or lower, in the selective catalytic reduction reaction with ammonia as the reductant, using a denitration catalyst having a defect site at which oxygen atoms are deficient in the crystal structure of vanadium pentoxide.

**Claims**

1. A denitration catalyst comprising vanadium oxide, wherein the vanadium oxide includes vanadium pentoxide, and has a defect site at which oxygen is deficient in the crystal structure of the vanadium pentoxide.

2. The denitration catalyst according to claim 1, wherein an intensity ratio ($P_{V2O5}/P_{v6O13}$) of peak intensity ($P_{v6O13}$) of a (110) plane of $V_6O_{13}$ relative to peak intensity ($P_{V2O5}$) of a (001) plane of $V_2O_5$ detected by powder X-ray diffraction, is at least 0.08 and no more than 2.05.

3. The denitration catalyst according to claim 1 or 2, wherein reflectance at wavelength 1200 nm normalized with reflectance at wavelength 600 nm as 1 in the ultraviolet-visible near-infrared absorption spectrum is no more than 0.90.

4. The denitration catalyst according to any one of claims 1 to 3, wherein a ratio of tetravalent vanadium relative to overall vanadium from a catalyst surface to 2 nm which is a photoelectron escape depth detected by X-ray photoelectron spectroscopy is at least 0.20.

5. The denitration catalyst according to any one of claims 1 to 4, wherein a ratio (P1/P3) of a peak intensity P1 of wavenumber 450 to 550 cm$^{-1}$ originating from crosslinked V-O$_B$-V bending vibration, relative to a peak intensity P3 of wavenumber 590 to 670 cm$^{-1}$ originating from edge-shaped 3V-O$_c$ bending vibration is no more than 1.6.

6. The denitration catalyst according to any one of claims 1 to 5, wherein the denitration catalyst is used in denitration at 270°C or lower.

7. A production method for the denitration catalyst according to any one of claims 1 to 6, the method comprising a step of mixing vanadate and a chelate compound, and firing at a temperature of 270°C or lower.

# FIG. 1A

# FIG. 1B

# FIG. 2A

# FIG. 2B

# FIG. 2C

# FIG. 2D

0.19 nm

# FIG. 2E

# FIG. 2F

# FIG. 2G

# FIG. 2H

# FIG. 2I

# FIG. 2J

0.61 nm

# FIG. 3

# FIG. 4

| | |
|---|---|
| PRECURSOR | $VO(C_2O_4)$, $(NH_4)_2[VO(C_2O_4)_2]$ |

↓

| | |
|---|---|
| V270-1 V270-2 | $V_6O_{13}$  $V_2O_5$  $V_2O_5 \cdot 1.6H_2O$  AMORPHOUS $V_2O_5$ |

↓

| | |
|---|---|
| V270-3 V270-4 | $V_2O_5 \cdot 1.6H_2O$  $V_2O_5$  $V_6O_{13}$  AMORPHOUS $V_2O_5$ |

↓

| | |
|---|---|
| COMPLETELY FIRED | $V_2O_5$  AMORPHOUS $V_2O_5$ |

# FIG. 5

# FIG. 6

# FIG. 7

# FIG. 8

# FIG. 9

# FIG. 10

1. Terminal oxygen
V=O

3. Bridging oxygen
V-OB-V

2. edge-sharing oxygen
3V-Oc

# FIG. 11

# FIG. 12

# FIG. 13

## INTERNATIONAL SEARCH REPORT

| International application No. |
| --- |
| PCT/JP2019/009203 |

**A. CLASSIFICATION OF SUBJECT MATTER**
Int.Cl. B01J23/22(2006.01)i, B01D53/86(2006.01)i, B01D53/90(2006.01)i

According to International Patent Classification (IPC) or to both national classification and IPC

**B. FIELDS SEARCHED**

Minimum documentation searched (classification system followed by classification symbols)
Int.Cl. B01J23/22, B01D53/86, B01D53/90

Documentation searched other than minimum documentation to the extent that such documents are included in the fields searched
Published examined utility model applications of Japan      1922–1996
Published unexamined utility model applications of Japan      1971–2019
Registered utility model specifications of Japan      1996–2019
Published registered utility model applications of Japan      1994–2019

Electronic data base consulted during the international search (name of data base and, where practicable, search terms used)
JSTPlus(JDreamIII), JST7580(JDreamIII), JSTChina(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 11-165068 A (MITSUBISHI HEAVY INDUSTRIES, LTD.) 22 June 1999, claims, paragraphs [0001], [0020] (Family: none) | 1-6<br>7 |
| X<br>A | JP 57-38939 A (ISHIKAWAJIMA-HARIMA HEAVY INDUSTRIES CO., LTD.) 03 March 1982, claims, page 2, column 4, line 2 to column 5, line 12, fig. 1 (Family: none) | 1-6<br>7 |
| X | JP 11-57469 A (MITSUBISHI HEAVY INDUSTRIES, LTD.) 02 March 1999, claims, paragraphs [0011], [0012] (Family: none) | 1-7 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22.05.2019 | 04.06.2019 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/009203 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 7-204513 A (NIPPON MUKI CO., LTD.) 08 August 1995, claims, paragraphs [0012]-[0014], table 1 (Family: none) | 1-7 |
| A | LEI, Z. G. et al., Experimental and kinetic study of low temperature selective catalytic reduction of NO with $NH_3$ over the $V_2O_5$/AC catalyst, Industrial & Engineering Chemistry Research, 25 March 2011, vol. 50, no. 9, pp. 5360-5368, ISSN 0888-5885, particularly, "2. Experimental section" column | 1-7 |
| A | JP 54-66390 A (KUBO, Yasushi) 28 May 1979, claims, example 8 (Family: none) | 1-7 |
| A | JP 7-204514 A (NIPPON MUKI CO., LTD.) 08 August 1995, claims, examples (Family: none) | 1-7 |

Form PCT/ISA/210 (continuation of second sheet) (January 2015)

## REFERENCES CITED IN THE DESCRIPTION

### Patent documents cited in the description

- JP 2004275852 A
- JP 6093101 B